# EUROPEAN PATENT APPLICATION

(11) **EP 4 803 497 A1**
(43) Date of publication of application: **09.09.2026**
(21) Application number: 24909618.1
(22) Date of filing: 26.06.2024
(51) Int. Cl.: C04B 35/563, C04B 35/626

(54) **METHOD FOR PREPARING BORON CARBIDE POWDER AND BORON CARBIDE BULLETPROOF CERAMIC PREPARED THEREFROM**

(30) Priority: 25.12.2023 CN 202311806294
(71) Applicant: Zhejiang Jicheng Advanced Ceramics Co., Ltd., Quzhou, Zhejiang 310000 (CN)
(72) Inventor: YIN, Bangjin, Quzhou, Zhejiang 310000 (CN); CHEN, Chong, Quzhou, Zhejiang 310000 (CN); WEN, Jianrong, Quzhou, Zhejiang 310000 (CN); BAI, Fei, Quzhou, Zhejiang 310000 (CN)
(74) Representative: Chung, Hoi Kan
(86) International application number: PCT/CN2024/101500
(87) International publication number: WO 2025/138658

(57) **Abstract**

The present invention belongs to the field of special ceramics, and specifically relates to a method for preparing a boron carbide powder. The method comprises the steps of: S1, pre-dispersion, involving: weighing two raw boron carbide powders in different particle size ranges, spraying a first dispersion solution onto the raw boron carbide powders and then dispersing same; S2, a sanding treatment, involving: transferring a slurry obtained from the pre-dispersion treatment to a high-speed sand mill, adding two boron carbide grinding balls of different sizes, and performing sanding at a speed of 18-20 m/s for 6-10 h, with the mass ratio of the boron carbide grinding balls to the raw boron carbide powders being 3-5: 1; S3, mixing and slurrying, involving: placing the sanded slurry into a high-speed dispersion machine, performing spraying with a second dispersion solution, adding a sintering aid, and then adding an aqueous solution of a water-soluble phenol-formaldehyde resin and an aqueous solution of sodium carboxymethyl cellulose to obtain a mixed slurry; and S4, spray granulation. In the present invention, two raw boron carbide powders in different particle size ranges are used to directly prepare the boron carbide powder used for producing a pressed blank; the process steps are short, the production cost is relatively low, and the method is suitable for large-scale production and application.

## Description

### TECHNICAL FIELD

The present disclosure belongs to the field of special ceramics, and specifically relates to a method for preparing a boron carbide powder.

### BACKGROUND

Boron carbide has the characteristics of low density, high strength, high-temperature stability, and good chemical stability. High-purity, fine-grained boron carbide powders can be used to prepare special boron carbide ceramic products through hot pressing sintering, spark plasma sintering(SPS), or pressureless sintering. The pressureless sintering is difficult for materials with high covalency, such as boron carbide, requiring appropriate design for the powders to obtain high-density sintered bodies. The finer the powder, the larger the specific surface area and the greater the driving force for sintering. Meanwhile, finer powders incur more structural defects during preparation, resulting in higher sintering activity, which can promote sintering and densification. Therefore, an effective approach to achieve pressureless sintering densification is powder nanocrystallization, that is, nanocrystallization of boron carbide powders is an important foundation for the pressureless sintering densification of boron carbide ceramics.

In the existing technology for preparing special boron carbide ceramic products, raw submicron boron carbide powders in specific particle size ranges are first obtained by mechanical methods, then the powders are formulated and pressed into green bodies, and the green bodies are finally sintered using specific sintering processes. For example, the patent application No. CN102432014A entitled "Method for Preparing Submicron Boron Carbide Powder" discloses that when a submicron boron carbide powder is prepared, a raw boron carbide powder, a dispersant, water, and medium balls are directly placed into a sand mill and milled for 3-60 h, and then the medium balls are filtered out to obtain a boron carbide slurry. This method requires a long grinding time to obtain the submicron powder, and there is powder agglomeration, resulting in insufficient grinding. The invention application No. CN113480314A entitled "Process for Preparing Boron Carbide Ceramic by Pressureless Sintering" discloses that a raw boron carbide powder is first ball-milled to obtain a submicron powder, then an aqueous solvent, a dispersant, a sintering aid, etc. are added to the submicron powder to obtain a mixture, the mixture is milled to obtain a slurry, and the slurry is spray-dried to obtain a granulated powder, which is subsequently pressed and subjected to pressureless sintering. This process has the following shortcomings: on the one hand, the initial sand milling treatment of the raw boron carbide powder requires a long time to obtain the submicron powder, resulting in high energy consumption and long treatment time; on the other hand, the particle size of the boron carbide powder is concentrated in a submicron range of 0.5-1.0 µm, leaving limited room for improvement on the performance of the sintered product.

Because the purity of industrial raw materials used to produce boron carbide cannot be strictly controlled, various impurities will be introduced during production. These impurities affect the grinding and crushing efficiency of boron carbide particles, as well as the performance of the subsequent pressureless sintered products.

Therefore, there is now a need to develop a new, efficient, low-cost preparation method with a short process flow that can directly use commercially available micron-sized boron carbide raw materials to prepare a high-performance boron carbide powder, so as to obtain special boron carbide ceramic products with high degree of densification, low density, excellent toughness, and high bulletproof performance.

### SUMMARY

The technical problem to be solved by the present disclosure is to provide a method for preparing a boron carbide powder, which is low in cost, high in efficiency, and capable of obtaining special boron carbide ceramic products with high degree of densification, low density, excellent toughness, and high bulletproof performance.

A specific solution of the present disclosure is as follows:

A method for preparing a boron carbide powder includes the following steps:
S1, pre-dispersion: placing a raw boron carbide powder with two particle size ranges into a high-speed disperser, starting the disperser, spraying a first dispersion solution onto the surface of the raw boron carbide powder through a plurality of atomizing nozzles arranged on a material barrel of the high-speed disperser, dispersing the powder for 0.5-1 h after the entire first dispersion solution is sprayed, and then turning off the disperser;
S2, sand milling: transferring slurry after pre-dispersion in S1 to a high-speed sand mill; adding two sizes of boron carbide grinding balls, with a mass ratio of the boron carbide grinding balls to the raw boron carbide powder being (3-5):1; introducing nitrogen, milling the slurry at a linear speed of 18-20 m/s for 6-10 h, and then filtering out the boron carbide grinding balls;
S3, mixing and slurry preparation: placing the slurry after sand milling in S2 in the high-speed disperser, spraying a second dispersion solution onto the surface of the slurry through the plurality of atomizing nozzles arranged on the material barrel of the high-speed disperser, adding a sintering aid with a mass being 2-3% of a total mass of the raw boron carbide powder in several portions, and dispersing the slurry for 10-30 min after the entire second dispersion solution is sprayed; adding an aqueous solution of water-soluble phenolic resin through the atomizing nozzles, adding an aqueous solution of sodium carboxymethyl cellulose in several portions, and dispersing the mixture for 2-3 h to obtain a mixed slurry; and
S4, spray granulation: adjusting the solid content of the mixed slurry prepared in S3 to 30-45%, and carrying out vacuum spray drying at a vacuum degree of 0.04-0.05 MPa and an outlet temperature of 95-100 °C to obtain a boron carbide powder for granulation.

Furthermore, the first dispersion solution is an aqueous solution of tetramethylammonium hydroxide, a mass ratio of the aqueous solution of tetramethylammonium hydroxide to the raw boron carbide powder is (1-1.2):1, and a total mass of the tetramethylammonium hydroxide is 1-2% of the total mass of the raw boron carbide powder.

Furthermore, the two sizes of boron carbide grinding balls are boron carbide grinding balls with diameters of 6-8 mm and 1-2 mm in a mass ratio of 1:1.

Furthermore, the sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1.

Furthermore, a mass of the water-soluble phenolic resin is 5-10% of the total mass of the raw boron carbide powder, and a mass of the sodium carboxymethyl cellulose is 2-3% of the total mass of the raw boron carbide powder.

Furthermore, the sodium carboxymethyl cellulose is dispersed using hot water at 80-99 °C.

Furthermore, the second dispersion solution is an aqueous solution of polyethylene glycol, and a mass of the polyethylene glycol is 1-2% of the total mass of the raw boron carbide powder.

Furthermore, before the pre-dispersion step S1, the method further includes a pretreatment step S0, where the pretreatment step specifically includes:
firstly, placing the raw boron carbide powder with two particle size ranges into a container, adding NaF powder, and stirring the mixed powder evenly; then adding an appropriate amount of 0.01-0.02 mol/L dilute hydrochloric acid solution, stirring the mixture continuously at 20-65 °C for 1-5 h, followed by centrifugal separation, and collecting a solid obtained from the centrifugal separation; and
washing the separated solid 1-3 times with deionized water and then 1-3 times with isopropanol solution, and drying the solid to obtain a pretreated raw boron carbide powder with two particle size ranges.

Furthermore, the raw boron carbide powder with two particle size ranges is boron carbide with an average particle size of 10-20 µm and an average particle size of 40-50 µm in a mass ratio of 1:1.

Furthermore, a mass of the NaF powder is 0.05-0.1% of the total mass of the raw boron carbide powder.

The present disclosure further provides a boron carbide bulletproof ceramic, which is prepared through pressing and pressureless sintering from the boron carbide powder prepared by the aforementioned method.

The beneficial effects of the present disclosure include at least the following:
1. The raw industrial-grade boron carbide powder, prepared by a carbothermal reduction method in an electric arc furnace, generally has a particle size of 10-50 µm, and contains impurities such as iron, iron oxide, aluminum, aluminum oxide, and silicon oxide. Before boron carbide bulletproof ceramic products are produced, boron carbide particles need to be ground and crushed to a submicron level in order to obtain densified high-performance boron carbide ceramic products through pressureless sintering. During the sand milling and crushing process of boron carbide particles, the presence of the aforementioned impurities affects full contact between the boron carbide particles and the dispersant, thereby impacting the dispersion efficiency of the boron carbide particles and consequently the crushing efficiency. The impact between the grinding media and the boron carbide particles during sand milling generates instantaneous high temperatures, which can easily allow metal elements or metal oxides to soften and adhere to the boron carbide particles, making it more difficult to effectively crush the boron carbide particles. Moreover, a high content of impurities such as iron and boron oxide hinders grain refinement of submicron boron carbide particles during the pressureless sintering process, thereby reducing the densification and toughness of the ceramic products.
   The present disclosure has found through preliminary experiments that various impurities account for about 0.1-0.2% of the raw boron carbide powder. By adding sodium fluoride and hydrochloric acid, impurities such as iron, iron oxide, aluminum, aluminum oxide, and boron oxide in the raw boron carbide powder react with the hydrochloric acid or hydrofluoric acid and dissolve. Through the pretreatment process, the impurities such as iron, iron oxide, aluminum, aluminum oxide, and silicon oxide can be effectively removed, significantly improving the subsequent dispersibility of the boron carbide particles and the effectiveness of the sand milling and crushing process. After impurity removal, the use of the isopropanol solution can, on the one hand, wash away soluble substances such as sodium ions, and on the other hand, modify the surface of the raw boron carbide powder to prevent powder agglomeration.
2. When using the sand milling technology from the prior art, it is found that the raw boron carbide powder exhibited agglomeration. Experimental analysis attributed the reason to the following: when water and dispersant are added directly at once to the micron-sized raw boron carbide powder, even with prolonged high-speed dispersion, some small agglomerates within the raw boron carbide powder remains unbroken. Adding all the aqueous solvent and dispersant at once, due to the amount of dispersant being far less than that of the raw boron carbide powder, causes some boron carbide particles to quickly absorb the aqueous solvent and dispersant, while another portion of the particles have difficulty in contact with the dispersant. This results in uneven contact between the boron carbide particles and the aqueous solvent and dispersant, leading to some boron carbide particles remaining as dry particles during subsequent grinding. The dry particles are crushed by collision with the grinding media to form small particles. The small particles that are not coated with the aqueous solvent and dispersant are prone to agglomerate again due to intermolecular forces. Therefore, using the sand milling technology in the prior art requires a large amount of grinding media and a long grinding time to obtain submicron-level boron carbide particles, making it time-consuming, labor-intensive, and energy-consuming.
   In the present disclosure, the dispersant and deionized water are thoroughly mixed in advance to form the first dispersion solution, which is then uniformly sprayed onto the boron carbide particles while stirring with the high-speed disperser, thereby improving the uniformity of contact between the boron carbide particles and fine droplets, and ensuring that all boron carbide particles are uniformly exposed to the dispersant and aqueous solvent as much as possible. Water acts as a solvent to create a suspension effect on the raw boron carbide powder, preventing the boron carbide particles from agglomerating and breaking cohesive forces between the particles. The unsaturated bonds on the surface of the boron carbide particles undergo a reversible reaction with water molecules, which facilitates the generation and expansion of cracks in the boron carbide particles, making them easier to be ground down and promoting the grinding process. By uniformly spraying the first dispersion solution through the nozzles, it ensures that most of the boron carbide particles are encapsulated by the aqueous solvent and dispersant. This reduces the consumption of grinding media, significantly shortens the mixing and dispersion time, and significantly reduces dry agglomeration of boron carbide particles and re-agglomeration of small particles broken during the grinding process, thereby greatly improving grinding efficiency and quality. The added alkaline tetramethylammonium hydroxide, on the one hand, improves the dispersibility of the boron carbide particles, and on the other hand, provides an alkaline environment for the sand milling process, ensuring the performance stability of boron carbide during the crushing process. By introducing nitrogen to reduce the oxygen content in the sand milling environment, the reaction of oxygen with boron carbide or other impurities under the instantaneous high-temperature conditions during the sand milling process is avoided.
3. In the present disclosure, the boron carbide grinding balls used as grinding media are made of the same material as the boron carbide particles, thereby avoiding contamination of the raw material that would occur if stainless steel balls are used. Compared with using a single size of grinding media, using two sizes of media for sand milling achieves higher grinding efficiency, and yields submicron boron carbide particles with a uniform particle size distribution and a finer diameter. During sand milling, the large-sized grinding media first crush the powder, while the small-sized grinding media simultaneously subject the powder to high-frequency extrusion and collision. The combination of the two sizes of grinding media enables efficient conversion of gravitational potential energy into the sand milling of the powder, significantly shortening the sand milling time and improving both the grinding efficiency and the crushing effect. In the present disclosure, the raw boron carbide powder with two particle size ranges is used to obtain boron carbide particles with a mixed particle size ranging from 100 nm to 1 µm after pre-dispersion and direct sand milling. The boron carbide particles of different sizes complement each other, with the smaller particles filling the gaps between the slightly larger particles, thereby increasing the overall density of the pressed green body and reducing porosity, ultimately improving the densification of the sintered product. In the present disclosure, the aqueous solution of tetramethylammonium hydroxide is used as the first dispersion solution for the raw boron carbide powder. As a nonionic wetting and dispersing agent, the tetramethylammonium hydroxide does not ionize or carry a charge in water, effectively reducing the surface tension of the boron carbide powder and improving its wettability. This reduces adsorption between boron carbide particles, minimizes agglomeration, and achieves high dispersion efficiency, thereby providing a suitable environment for the sand milling and crushing process.
4. In the present disclosure, the aqueous solution of polyethylene glycol is used as the second dispersion solution for surface modification of the nano- and submicron-level boron carbide particles obtained after sand milling, to form chemical bonds on the surface of the boron carbide particles, thereby providing certain surface activity, and establishing a cross-linked structure between the boron carbide particles and the phenolic resin. This helps to improve the dispersibility and stability of the nano- and submicron-level boron carbide particles and reduce agglomeration. The aqueous solution of polyethylene glycol and the water-soluble phenolic resin are uniformly dissolved in water in advance, and then evenly sprayed onto the surface of the slurry through the nozzles, thereby significantly improving the uniformity of mixing with the slurry.
5. In the present disclosure, the addition of sintering aids such as titanium carbide, zirconium carbide, and lanthanum carbide with an average particle size of 0.5-1 µm can achieve effective pinning of grain boundaries, inhibit the growth of boron carbide grains, provide fine-grain strengthening, and improve the fracture toughness of boron carbide products. Meanwhile, the addition of sintering aids reduces grain boundary energy, increases surface energy, and promotes the formation of neck connections between adjacent boron carbide particles during high-temperature sintering, thereby enhancing densification, refining grains, lowering the ceramic sintering temperature, and improving sintering densification.

### BRIEF DESCRIPTION OF DRAWINGS

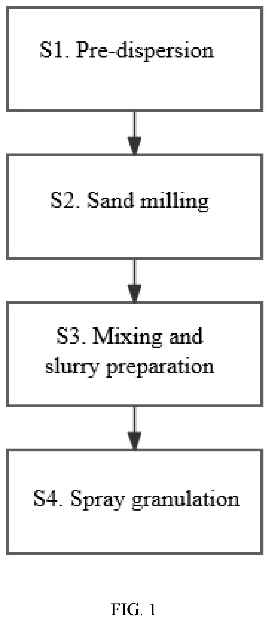

FIG. 1 is a schematic diagram of the preparation process of boron carbide powder in Embodiment 1 of the present disclosure;

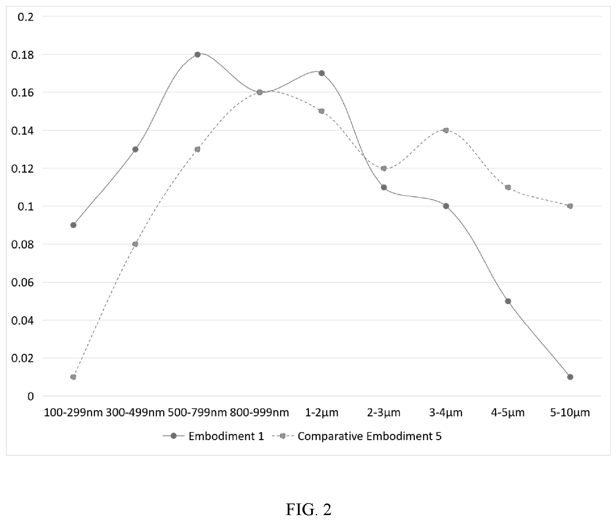

FIG. 2 is a schematic diagram showing the particle size distribution of boron carbide sampled after the sand milling step in Embodiment 1 and Comparative Embodiment 5 of the present disclosure, wherein the horizontal axis represents the particle size range of boron carbide particles, and the vertical axis represents the proportion; and

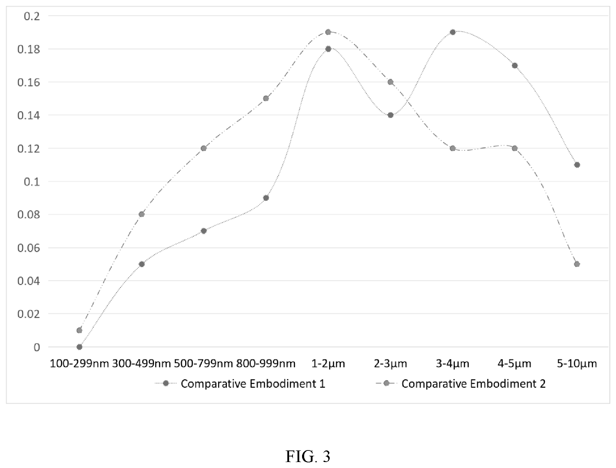

FIG. 3 is a schematic diagram showing the particle size distribution of boron carbide sampled after sand milling in Comparative Embodiment 1 and Comparative Embodiment 2 of the present disclosure, where the horizontal axis represents the particle size range of boron carbide particles, and the vertical axis represents the proportion.

### DETAILED DESCRIPTION OF THE EMBODIMENTS

The technical solutions in the embodiments of the present disclosure will be clearly and completely described below in conjunction with the accompanying drawings. Apparently, the described embodiments are merely some of the embodiments of the present disclosure, not all of them. Based on the embodiments of the present disclosure, all other embodiments obtained by those of ordinary skill in the art without any creative efforts shall fall within the scope of protection of the present disclosure.

### Embodiment 1

A method for preparing a boron carbide powder in this Embodiment includes the following steps:
S0. Pretreatment of a raw boron carbide powder:
Firstly, 60 kg of a raw boron carbide powder with two particle size ranges( i.e., an average particle size of 10-20 µm and an average particle size of 40-50 µm) in a mass ratio of 1:1, is placed in a stirring container. Then, 0.06 kg of NaF powder is added, and the mixed powder is stirred uniformly. Subsequently, while stirring, a total of 150 L of 0.02 mol/L dilute hydrochloric acid solution is added in several portions. The mixture is continuously stirred at room temperature (20-35 °C) for 5 h, followed by centrifugal separation, and the solid obtained from centrifugal separation is collected.

The separated solid is first washed with deionized water three times, then washed with isopropanol solution twice, and finally dried to obtain a pretreated raw boron carbide powder with the two particle size ranges.

S1. Pre-dispersion: 50 kg of the pretreated raw boron carbide powder with the two particle size ranges is placed in a high-speed disperser. The disperser is started at 200-300 r/min. Through a plurality of atomizing nozzles (nozzle aperture ≤0.3 mm, atomized particles ≤30 µm, nozzle flow rate ≤0.1 L/min) arranged on a material barrel of the high-speed disperser, a first dispersion solution, i.e., an aqueous solution of tetramethylammonium hydroxide, is sprayed onto the surface of the raw boron carbide powder. A mass ratio of the aqueous solution of tetramethylammonium hydroxide to the raw boron carbide powder is 1:1, and a total mass of the tetramethylammonium hydroxide is 0.5 kg. The aqueous solution of tetramethylammonium hydroxide is prepared using deionized water. After the entire first dispersion solution is sprayed, dispersion is continued at 300-400 r/min for 1 h, and then the disperser is turned off.

S2. Sand milling: The slurry pre-dispersed in S1 is transferred to a high-speed sand mill. Two sizes of boron carbide grinding balls with diameters of 6-8 mm and 1-2 mm in a mass ratio of 1:1 are added. A mass ratio of the boron carbide grinding balls to the raw boron carbide powder is 3:1. After nitrogen is introduced, the mixture is milled at a linear speed of 18-19 m/s for 10 h. The boron carbide grinding balls are then filtered out.

S3. Mixing and slurry preparation: The slurry after sand milling in S2 is placed in the high-speed disperser and dispersed at 200-300 r/min. Meanwhile, a second dispersion solution is sprayed onto the surface of the slurry through the plurality of atomizing nozzles arranged on the material barrel of the high-speed disperser. The second dispersion solution is an aqueous solution of polyethylene glycol, and a mass of the polyethylene glycol is 1% of a total mass of the raw boron carbide powder, i.e., 0.5 kg. Simultaneously, 1 kg of a sintering aid, which accounts for 2% of the total mass of the raw boron carbide powder, is added in several portions. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. After the entire second dispersion solution is sprayed, dispersion is continued at 300-400 r/min for 30 min. Subsequently, an aqueous solution of water-soluble phenolic resin is added through the plurality of atomizing nozzles, with a mass of the water-soluble phenolic resin being 5% of the total mass of the raw boron carbide powder, i.e., 2.5 kg. Meanwhile, an aqueous solution of sodium carboxymethyl cellulose, which is prepared by dispersing and dissolving sodium carboxymethyl cellulose in 90 °C hot water and then cooling to below 35 °C, is added in several portions, with a mass of the sodium carboxymethyl cellulose being 2% of the total mass of the raw boron carbide powder, i.e., 1 kg. The mixture is then dispersed at 500-600 r/min for 3 h to obtain a mixed slurry.

S4. Spray granulation: The solid content of the mixed slurry prepared in S3 is adjusted to 35%. Vacuum spray drying is carried out at a vacuum degree of 0.04-0.05 MPa and an outlet temperature of 95-98 °C to obtain a boron carbide powder for granulation.

The boron carbide powder prepared in this Embodiment is used for the preparation of a special boron carbide bulletproof ceramic. For the subsequent steps, reference is made to the relevant content recorded in the patent application with publication number CN113587728B, which specifically includes: placing the boron carbide powder for granulation into a mold, and preparing a green body with a relative density ≥60% from the boron carbide powder by hydraulic pressing and isostatic pressing; placing the green body in a sintering boat and performing pressureless sintering to obtain the special boron carbide bulletproof ceramic.

### Embodiment 2

A method for preparing a boron carbide powder in this Embodiment includes the following steps:
S0. Pretreatment of a raw boron carbide powder:
Firstly, 60 kg of a raw boron carbide powder with two particle size ranges (i.e., an average particle size of 10-20 µm and an average particle size of 40-50 µm) in a mass ratio of 1:1, is placed in a container. Then, 0.03 kg of NaF powder is added, and the mixed powder is stirred uniformly. Subsequently, while stirring, a total of 300 L of 0.01 mol/L dilute hydrochloric acid solution is added in several portions. The mixture is continuously stirred at room temperature (30-50 °C) for 3 h, followed by centrifugal separation, and the solid obtained from centrifugal separation is collected.

The separated solid is first washed with deionized water twice, then washed with isopropanol solution three times, and finally dried to obtain a pretreated raw boron carbide powder with the two particle size ranges.

S1. Pre-dispersion: 50 kg of the pretreated raw boron carbide powder with the two particle size ranges is placed in a high-speed disperser. The disperser is started at 200-300 r/min. Through a plurality of atomizing nozzles (nozzle aperture ≤0.3 mm, atomized particles ≤30 µm, nozzle flow rate ≤0.1 L/min) arranged on a material barrel of the high-speed disperser, a first dispersion solution, i.e., an aqueous solution of tetramethylammonium hydroxide, is sprayed onto the surface of the raw boron carbide powder. A mass ratio of the aqueous solution of tetramethylammonium hydroxide to the raw boron carbide powder is 1.2:1, and a total mass of the tetramethylammonium hydroxide is 1 kg. After the entire first dispersion solution is sprayed, dispersion is continued at 300-400 r/min for 1 h, and then the disperser is turned off.

S2. Sand milling: The slurry pre-dispersed in S1 is transferred to a high-speed sand mill. Two sizes of boron carbide grinding balls with diameters of 6-8 mm and 1-2 mm in a mass ratio of 1:1 are added. A mass ratio of the boron carbide grinding balls to the raw boron carbide powder is 5:1. After nitrogen is introduced, the mixture is milled at a linear speed of 19-20 m/s for 6 h. The boron carbide grinding balls are then filtered out.

S3. Mixing and slurry preparation: The slurry after sand milling in S2 is placed in the high-speed disperser and dispersed at 200-300 r/min. Meanwhile, a second dispersion solution is sprayed onto the surface of the slurry through the plurality of atomizing nozzles arranged on the material barrel of the high-speed disperser. The second dispersion solution is an aqueous solution of polyethylene glycol, and a mass of the polyethylene glycol is 2% of a total mass of the raw boron carbide powder, i.e., 1 kg. Simultaneously, 1.5 kg of a sintering aid, which accounts for 3% of the total mass of the raw boron carbide powder, is added in several portions. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. After the entire second dispersion solution is sprayed, dispersion is continued at 300-400 r/min for 20 min. Subsequently, an aqueous solution of water-soluble phenolic resin is added through the plurality of atomizing nozzles, with a mass of the water-soluble phenolic resin being 10% of the total mass of the raw boron carbide powder, i.e., 5 kg. Meanwhile, an aqueous solution of sodium carboxymethyl cellulose, which is prepared by dispersing and dissolving sodium carboxymethyl cellulose in 95 °C hot water and then cooling to below 25 °C, is added in several portions, with a mass of the sodium carboxymethyl cellulose being 3% of the total mass of the raw boron carbide powder, i.e., 1.5 kg. The mixture is then dispersed at 500-600 r/min for 2.5 h to obtain a mixed slurry.

S4. Spray granulation: The solid content of the mixed slurry prepared in S3 is adjusted to 45%. Vacuum spray drying is carried out at a vacuum degree of 0.04-0.05 MPa and an outlet temperature of 98-100 °C to obtain a boron carbide powder for granulation.

The boron carbide powder prepared in this Embodiment is used for the preparation of a special boron carbide bulletproof ceramic. The preparation method is the same as in Embodiment 1.

### Embodiment 3

A method for preparing a boron carbide powder in this Embodiment includes the following steps:
S0. Pre-treatment of a raw boron carbide powder:
Firstly, 60 kg of a raw boron carbide powder with two particle size ranges (i.e., an average particle size of 10-20 µm and an average particle size of 40-50 µm) in a mass ratio of 1:1, is placed in a container. Then, 0.04 kg of NaF powder is added, and the mixed powder is stirred uniformly. Subsequently, while stirring, a total of 200 L of 0.02 mol/L dilute hydrochloric acid solution is added in several portions. The mixture is continuously stirred at room temperature (50-65 °C) for 1 h, followed by centrifugal separation, and the solid obtained from centrifugal separation is collected.

The separated solid is washed with isopropanol solution three times, and then dried to obtain a pretreated raw boron carbide powder with the two particle size ranges.

S1. Pre-dispersion: 50 kg of the pretreated raw boron carbide powder with the two particle size ranges is placed in a high-speed disperser. The disperser is started at 200-300 r/min. Through a plurality of atomizing nozzles (nozzle aperture ≤0.3 mm, atomized particles ≤30 µm, nozzle flow rate ≤0.1 L/min) arranged on a material barrel of the high-speed disperser, a first dispersion solution, i.e., an aqueous solution of tetramethylammonium hydroxide, is sprayed onto the surface of the raw boron carbide powder. A mass ratio of the aqueous solution of tetramethylammonium hydroxide to the raw boron carbide powder is 1.1:1, and a total mass of the tetramethylammonium hydroxide is 0.75 kg. After the entire first dispersion solution is sprayed, dispersion is continued at 300-400 r/min for 0.5 h, and then the disperser is turned off.

S2. Sand milling: The slurry pre-dispersed in S1 is transferred to a high-speed sand mill. Two sizes of boron carbide grinding balls with diameters of 6-8 mm and 1-2 mm in a mass ratio of 1:1 are added. A mass ratio of the boron carbide grinding balls to the raw boron carbide powder is 3:1. After nitrogen is introduced, the mixture is milled at a linear speed of 19-20 m/s for 8 h. The boron carbide grinding balls are then filtered out.

S3. Mixing and slurry preparation: The slurry after sand milling in S2 is placed in the high-speed disperser and dispersed at 200-300 r/min. Meanwhile, a second dispersion solution is sprayed onto the surface of the slurry through the plurality of atomizing nozzles arranged on the material barrel of the high-speed disperser. The second dispersion solution is an aqueous solution of polyethylene glycol, and a mass of the polyethylene glycol is 1% of a total mass of the raw boron carbide powder, i.e., 0.5 kg. Simultaneously, 1 kg of a sintering aid, which accounts for 2% of the total mass of the raw boron carbide powder, is added in several portions. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. After the entire second dispersion solution is sprayed, dispersion is continued at 300-400 r/min for 15 min. Subsequently, an aqueous solution of water-soluble phenolic resin is added through the plurality of atomizing nozzles, with a mass of the water-soluble phenolic resin being 10% of the total mass of the raw boron carbide powder, i.e., 5 kg. Meanwhile, an aqueous solution of sodium carboxymethyl cellulose, which is prepared by dispersing and dissolving sodium carboxymethyl cellulose in 95 °C hot water and then cooling to below 25 °C, is added in several portions, with a mass of the sodium carboxymethyl cellulose being 2% of the total mass of the raw boron carbide powder, i.e., 1 kg. The mixture is then dispersed at 500-600 r/min for 3 h to obtain a mixed slurry.

S4. Spray granulation: The solid content of the mixed slurry prepared in S3 is adjusted to 35-38%. Vacuum spray drying is carried out at a vacuum degree of 0.04-0.05 MPa and an outlet temperature of 95-100 °C to obtain a boron carbide powder for granulation.

The boron carbide powder prepared in this Embodiment is used for the preparation of a special boron carbide bulletproof ceramic. The preparation method is the same as that in Embodiment 1.

### Embodiment 4

As shown in FIG. 1, a method for preparing a boron carbide powder in this Embodiment includes the following steps:
S1. Pre-dispersion: 50 kg of a raw boron carbide powder with two particle size ranges, i.e., an average particle size of 10-15 µm and an average particle size of 40-50 µm in a mass ratio of 1:1, is placed in a high-speed disperser. The disperser is started at 200-300 r/min. Through a plurality of atomizing nozzles (nozzle aperture =0.2 mm, atomized particles ≤30 µm, nozzle flow rate ≤0.1 L/min) arranged on a material barrel of the high-speed disperser, a first dispersion solution, i.e., an aqueous solution of tetramethylammonium hydroxide, is sprayed onto the surface of the raw boron carbide powder. A mass ratio of the aqueous solution of tetramethylammonium hydroxide to the raw boron carbide powder is 1:1, and a total mass of the tetramethylammonium hydroxide is 0.85 kg. After the entire first dispersion solution is sprayed, dispersion is continued at 300-400 r/min for 1 h, and then the disperser is turned off.

S2. Sand milling: The slurry pre-dispersed in S1 is transferred to a high-speed sand mill. Two sizes of boron carbide grinding balls with diameters of 6-8 mm and 1-2 mm in a mass ratio of 1:1 are added. A mass ratio of the boron carbide grinding balls to the raw boron carbide powder is 4:1. After nitrogen is introduced, the mixture is milled at a linear speed of 19-20 m/s for 9 h. The boron carbide grinding balls are then filtered out.

S3. Mixing and slurry preparation: The slurry after sand milling in S2 is placed in the high-speed disperser and dispersed at 200-300 r/min. Meanwhile, a second dispersion solution is sprayed onto the surface of the slurry through the plurality of atomizing nozzles arranged on the material barrel of the high-speed disperser. The second dispersion solution is an aqueous solution of polyethylene glycol, and a mass of the polyethylene glycol is 1.5% of a total mass of the raw boron carbide powder, i.e., 0.75 kg. Simultaneously, 1.25 kg of a sintering aid, which accounts for 2.5% of the total mass of the raw boron carbide powder, is added in several portions. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. After the entire second dispersion solution is sprayed, dispersion is continued at 300-400 r/min for 25 min. Subsequently, an aqueous solution of water-soluble phenolic resin is added through the plurality of atomizing nozzles, with a mass of the water-soluble phenolic resin being 8% of the total mass of the raw boron carbide powder, i.e., 4 kg. Meanwhile, an aqueous solution of sodium carboxymethyl cellulose, which is prepared by dispersing and dissolving sodium carboxymethyl cellulose in 85-95 °C hot water and then cooling to room temperature, is added in several portions, with a mass of the sodium carboxymethyl cellulose being 1.5 kg. The mixture is then dispersed at 500-600 r/min for 2.5 h to obtain a mixed slurry.

S4. Spray granulation: The solid content of the mixed slurry prepared in S3 is adjusted to 40-45%. Vacuum spray drying is carried out at a vacuum degree of 0.04-0.05 MPa and an outlet temperature of 99-100 °C to obtain a boron carbide powder for granulation.

The boron carbide powder prepared in this Embodiment is used for the preparation of a special boron carbide bulletproof ceramic. The preparation method is the same as in Embodiment 1.

The following are Comparative Embodiments of the present disclosure.

### Comparative Embodiment 1

A method for preparing a boron carbide powder in this Comparative Embodiment is the same as in Embodiment 1, except for steps S1 and S3.

S1. The pretreated raw boron carbide powder with the two particle size ranges is placed in a high-speed disperser. An equal weight of deionized water is added to the raw boron carbide powder in one portion. The disperser is started, dispersion is continued at 300-400 r/min for 1 h-1.5 h, and then the disperser is turned off.

S3. Mixing and slurry preparation: The slurry after sand milling in S2 is placed in the high-speed disperser. 1 kg of a sintering aid is added in one portion. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. Subsequently, an aqueous solution of water-soluble phenolic resin is added in one portion, with a mass of the water-soluble phenolic resin being 2.5 kg. Meanwhile, an aqueous solution of sodium carboxymethyl cellulose, which is prepared by dispersing and dissolving sodium carboxymethyl cellulose in 90 °C hot water and then cooling to below 35 °C, is added in one portion, with a mass of the sodium carboxymethyl cellulose being 1 kg. The mixture is then dispersed at 500-600 r/min for 3 h-3.5 h to obtain a mixed slurry.

In this Comparative Embodiment, deionized water is added in one portion during the pretreatment process, while no tetramethylammonium hydroxide is added; other materials are added in one portion during the mixing and slurry preparation process, while no polyethylene glycol is added.

### Comparative Embodiment 2

A method for preparing a boron carbide powder in this Comparative Embodiment is the same as in Embodiment 1, except for steps S1 and S3.

S1. Pre-dispersion: 50 kg of the pretreated raw boron carbide powder with the two particle size ranges is placed in a high-speed disperser. A first dispersion solution, i.e., an aqueous solution of tetramethylammonium hydroxide, is added in one portion. A mass ratio of the aqueous solution of tetramethylammonium hydroxide to the raw boron carbide powder is 1:1, and a total mass of the tetramethylammonium hydroxide is 0.5 kg. The disperser is started, dispersion is continued at 200-300 r/min for 15 min, then dispersion is repeated at 300-400 r/min for 1 h, and finally the disperser is turned off.

S3. Mixing and slurry preparation: The slurry after sand milling in S2 is placed in the high-speed disperser. A second dispersion solution, i.e., an aqueous solution of polyethylene glycol, is added in one portion, with a mass of the polyethylene glycol being 0.5 kg. 1 kg of a sintering aid is added in one portion. The sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1. Subsequently, an aqueous solution of water-soluble phenolic resin is added in one portion, with a mass of the water-soluble phenolic resin being 2.5 kg. Meanwhile, an aqueous solution of sodium carboxymethyl cellulose, which is prepared by dispersing and dissolving sodium carboxymethyl cellulose in 90 °C hot water and then cooling to below 35 °C, is added in one portion, with a mass of the sodium carboxymethyl cellulose being 1 kg. The mixture is then dispersed at 500-600 r/min for 3 h-3.5 h to obtain a mixed slurry.

In this Comparative Embodiment, the aqueous solution of tetramethylammonium hydroxide is added in one portion during the pretreatment process; and the aqueous solution of polyethylene glycol, the sintering aid, the aqueous solution of sodium carboxymethyl cellulose, and the aqueous solution of water-soluble phenolic resin are all added in one portion during the mixing and slurry preparation process.

FIG. 3 shows particle size distribution statistics of boron carbide after sand milling in Comparative Embodiment 1 and Comparative Embodiment 2: in Comparative Embodiment 1, the proportion of boron carbide is 0.21 at the particle size below 1 µm and 0.79 at the particle size of 1-10 µm; in Comparative Embodiment 2, the proportion of boron carbide is 0.36 at the particle size below 1 µm and 0.64 at the particle size of 1-10 µm. In Comparative Embodiment 1, in the pre-dispersion step S1, the deionized water is added in one portion to the raw boron carbide powder, and no tetramethylammonium hydroxide is added; after sand milling, although the particle sizes of boron carbide particles are all within the range of 1-10 µm, the proportion of particles below 1 µm is relatively small. In Comparative Embodiment 2, in the pre-dispersion step S1, the aqueous solution of tetramethylammonium hydroxide is added to the raw boron carbide powder, so compared with Comparative Embodiment 1, although the proportion of boron carbide particles below 1 µm after sand milling increases significantly, the proportion above 1 µm remains relatively high. The reason is attributed to the fact that adding the deionized water or the aqueous solution of tetramethylammonium hydroxide in one portion fails to uniformly disperse all boron carbide particles, resulting in powder agglomeration, and that during the sand milling process, the micron-sized boron carbide re-agglomerates after being broken down.

### Comparative Embodiment 3

A method for preparing a boron carbide powder in this Comparative Embodiment is the same as in Embodiment 1, except for the sintering aid added in step S3.

Step S3. Mixing and slurry preparation: 1 kg of a sintering aid is added in several portions, with the sintering aid being a titanium carbide particle micropowder with an average particle size of 0.5-1 µm. The sintering aid in this Comparative Embodiment is titanium carbide, and no zirconium carbide or lanthanum carbide is added.

### Comparative Embodiment 4

A method for preparing a boron carbide powder in this Comparative Embodiment is the same as in Embodiment 1, except for S0 pretreatment and S2 sand milling.

S0. Pretreatment of a raw boron carbide powder:
Firstly, 60 kg of a raw boron carbide powder with an average particle size of 10-20 µm is placed in a container. NaF powder is added, with a mass of the NaF powder being 0.3% of a total mass of the raw boron carbide powder, i.e., 0.18 kg. The mixed powder is stirred uniformly. Subsequently, a total of 150 L of 0.02 mol/L dilute hydrochloric acid solution is added in several portions. The mixture is continuously stirred at 50-65 °C for 1 h, followed by centrifugal separation, and the solid obtained from centrifugal separation is collected. The separated solid is first washed with deionized water once, then washed with isopropanol solution twice, and finally dried to obtain a pretreated raw boron carbide powder with two particle size ranges.

S2. Sand milling: The slurry pre-dispersed in S1 is transferred to a high-speed sand mill. Boron carbide grinding balls with a diameter of 1-2 mm are added, with a mass ratio of the boron carbide grinding balls to the raw boron carbide powder being 3:1. The mixture is milled at a linear speed of 18-19 m/s for 10 h. The boron carbide grinding balls are then filtered out.

In this Comparative Embodiment, the raw boron carbide powder with the particle size range of 10-20 µm is used as a raw material, and only the boron carbide grinding balls with the diameter of 1-2 mm are used for sand milling. After sand milling, it is found that the particle size distribution of all particles is concentrated between 0.5 and 3 µm, with a particle size D50 of 0.8-1.0 µm, and the boron carbide particles below 1 µm accounts for about 32%.

### Comparative Embodiment 5

A method for preparing a boron carbide powder in this Comparative Embodiment is the same as in Embodiment 1, except for S2 sand milling.

S2. Sand milling: The slurry pre-dispersed in S1 is transferred to a high-speed sand mill. Boron carbide grinding balls with a diameter of 6-8 mm are added, with a mass ratio of the boron carbide grinding balls to the raw boron carbide powder being 3:1. The mixture is milled at a linear speed of 18-19 m/s for 10 h. The boron carbide grinding balls are then filtered out.

In this Comparative Embodiment, only the boron carbide grinding balls with the diameter of 6-8 mm are used for sand milling.

In Embodiment 1 and Comparative Embodiments 1, 2, and 5, after the raw boron carbide powder is subjected to sand milling treatment, the boron carbide grinding balls are filtered out, and 1 kg of the dried powder is taken to determine a particle size distribution range of boron carbide using a sieving method.

As shown in FIG. 2, the particle size distribution statistics of boron carbide after sand milling in Embodiment 1 and Comparative Embodiment 5 show that in Comparative Embodiment 5, only the boron carbide grinding balls with the diameter of 6-8 mm are used for sand milling, approximately 0.38 of the boron carbide particles has a particle size below 1 µm, approximately 0.52 has a particle size of 1-5 µm, and approximately 0.1 has a particle size of 5-10 µm, indicating that most of the boron carbide remains micron-sized after milling. In Embodiment 1, the proportion of boron carbide particles with the particle size below 1 µm is 0.56, indicating that most of the boron carbide particles are nano-scale, while the proportion of boron carbide particles with the particle size of 1-4 µm is approximately 0.38. Therefore, in Embodiment 1, since two sizes of grinding media are used, the grinding efficiency is better than that in Comparative Embodiment 5, resulting in finer boron carbide particle sizes and a higher proportion of nano-scale boron carbide. Subsequent tests on the prepared ceramic product show that the ratio of micron-scale to nano-scale boron carbide is approximately 4:6, which is more conducive to densification and grain refinement during pressureless sintering.

The boron carbide powders prepared in Embodiments 1-4 and Comparative Embodiments 1-5 are used to prepare special boron carbide bulletproof ceramic tiles following the steps in Embodiment 1. The actual density and hardness of the ceramic tiles are measured, the relative density of the ceramic tiles is calculated, and the results are shown in Table 1.

### Comparative Embodiment 6

A method for preparing a boron carbide powder in this Comparative Embodiment is the same as in Embodiment 1, except for step S3.

Step S3. Mixing and slurry preparation: 1 kg of a sintering aid is added in several portions. The sintering aid consists of titanium carbide and zirconium carbide particle micropowders with an average particle size of 0.5-1 µm, in a mass ratio of 1:1.

Compared with Embodiment 1, no lanthanum carbide is added in this Comparative Embodiment.

**Table 1 Performance test results of boron carbide ceramic tiles prepared in various Embodiments and Comparative Embodiments**

| Serial number | Theoretical density g/cm³ | Actual density g/cm³ | Relative density | Vickers hardness HV1.0 |
|---|---|---|---|---|
| Embodiment 1 | 2.76 | 2.737 | 99.2% | 3230 |
| Embodiment 2 | 2.75 | 2.719 | 98.9% | 3145 |
| Embodiment 3 | 2.76 | 2.735 | 99.1% | 3210 |
| Embodiment 4 | 2.77 | 2.728 | 98.5% | 3108 |
| Comparative Embodiment 1 | 2.75 | 2.620 | 95.3% | 3032 |
| Comparative Embodiment 2 | 2.76 | 2.663 | 96.5% | 3027 |
| Comparative Embodiment 3 | 2.75 | 2.692 | 97.9% | 3044 |
| Comparative Embodiment 4 | 2.76 | 2.691 | 97.5% | 3039 |
| Comparative Embodiment 5 | 2.76 | 2.646 | 95.9% | 3015 |
| Comparative Embodiment 6 | 2.75 | 2.703 | 98.3% | 3098 |

According to the test results of Embodiments 1 to 4 in Table 1 above, the actual density of the boron carbide ceramic tiles prepared by the method of the present disclosure is greater than or equal to 2.72 g/cm³, the relative density of 98.5% or above, and the Vickers hardness (HV1.0) ranging from 3100 and 3200. The boron carbide ceramic tiles prepared by the present disclosure have high density, high degree of densification, and high hardness, making them suitable for use as reinforced bulletproof inserts and bulletproof armors.

In Embodiment 4, since the raw boron carbide powder is not subjected to impurity removal pretreatment, the resulting relative density is 98.5%, which is slightly lower than that of the boron carbide ceramic tiles in Embodiments 1-3, but higher than that of the boron carbide ceramic tiles in Comparative Embodiments 1-6. This indicates that using the pretreatment, sand milling, and mixing steps of the present disclosure, even directly treating the raw boron carbide powder without impurity removal can yield ceramic products with high degree of densification. Moreover, the pretreatment, sand milling, and mixing steps performed on the raw boron carbide powder after impurity removal can achieve further improvement in densification.

Comparing the test data of Embodiment 1 and Comparative Embodiment 3, in Comparative Embodiment 3, the sintering aid is titanium carbide without the addition of zirconium carbide and lanthanum carbide, and the relative density of the sintered boron carbide ceramic product is 97.9%, indicating that the addition of zirconium carbide and lanthanum carbide as sintering aids can significantly improve the relative density and Vickers hardness of pressureless sintered boron carbide ceramics.

Comparing the test data of Embodiment 1 and Comparative Embodiment 4, in Comparative Embodiment 4, the raw boron carbide powder with the particle size range of 10-20 µm is used as a raw material, only the boron carbide grinding balls with the diameter of 1-2 mm are used for sand milling, and after sand milling, it is found that the particle size distribution of all particles is concentrated between 0.5 and 3 µm, with the proportion of boron carbide particles below 1 µm being approximately 32%. Therefore, in Comparative Embodiment 4, only one type of boron carbide grinding balls is used for sand milling of the raw boron carbide powder with the particle size range of 10-20 µm, and under the same sand milling time as in Embodiment 1, the proportion of boron carbide particles below 1 µm does not reach 50%. Subsequent experimental verification finds that the solution of Comparative Embodiment 4 requires extending the sand milling time to 16-20 hours and increasing the ratio of the boron carbide grinding balls to the raw powder to 8:1 in order to achieve better sand milling and crushing effects, which significantly increases the energy consumption, time, and cost of the sand milling process.

From the comparison of the test results of the boron carbide ceramic tiles in the Embodiments and Comparative Embodiments in Table 1, it can be seen that the present disclosure directly uses the raw boron carbide powder with two different particle size ranges for pre-dispersion, sand milling, mixing and slurry preparation, to obtain a boron carbide powder for granulation of green bodies, thereby optimizing the production process and making it suitable for large-scale industrial production; by optimizing the pre-dispersion treatment, the phenomenon of powder agglomeration is significantly reduced; the use of two types of sand milling media greatly improves the sand milling efficiency, and reduces the sand milling time by half compared to original 10-24 hours, resulting in substantial time savings; the optimized mixing and slurry preparation process significantly enhances the mixing efficiency of the powders and improves the densification of the sintered product, thereby yielding boron carbide ceramic products with excellent bulletproof performance, characterized by a density of greater than or equal to 2.72 g/cm³ and a Vickers hardness (HV1.0) greater than 3100.

The above are merely Embodiments, and do not limit the present disclosure in any way. Any skilled person familiar with this art can use the technical content disclosed above to make many possible changes, modifications, or equivalent Embodiments to the technical solution of the present disclosure without departing from the scope of the technical solution of the present disclosure. Therefore, any simple modifications, equivalent changes and adaptations made to the above embodiments according to the technical essence of the present disclosure without departing from the content of the technical solution of the present disclosure shall fall within the protection scope of the technical solution of the present disclosure.

## Claims

1. A method for preparing a boron carbide powder, comprising the following steps:
S1, pre-dispersion: placing a raw boron carbide powder with two particle size ranges into a high-speed disperser, starting the disperser, spraying a first dispersion solution onto the surface of the raw boron carbide powder through a plurality of atomizing nozzles arranged on a material barrel of the high-speed disperser, dispersing the powder for 0.5-1 h after the entire first dispersion solution is sprayed, and then turning off the disperser;
S2, sand milling: transferring slurry after pre-dispersion in S1 to a high-speed sand mill; adding two sizes of boron carbide grinding balls, with a mass ratio of the boron carbide grinding balls to the raw boron carbide powder being (3-5):1; introducing nitrogen, milling the slurry at a linear speed of 18-20 m/s for 6-10 h, and then filtering out the boron carbide grinding balls;
S3, mixing and slurry preparation: placing the slurry after sand milling in S2 in the high-speed disperser, spraying a second dispersion solution onto the surface of the slurry through the plurality of atomizing nozzles arranged on the material barrel of the high-speed disperser, adding a sintering aid with a mass being 2-3% of a total mass of the raw boron carbide powder in several portions, and dispersing the slurry for 10-30 min after the entire second dispersion solution is sprayed; adding an aqueous solution of water-soluble phenolic resin through the atomizing nozzles, and while dispersing, adding an aqueous solution of sodium carboxymethyl cellulose in several portions to obtain a mixed slurry; wherein the sintering aid is a mixture of titanium carbide, zirconium carbide, and lanthanum carbide with an average particle size of 0.5-1 µm, and a mass ratio of titanium carbide: zirconium carbide: lanthanum carbide is 2:1:1; and
S4, spray granulation: adjusting the solid content of the mixed slurry prepared in S3 to 30-45%, and carrying out vacuum spray drying at a vacuum degree of 0.04-0.05 MPa and an outlet temperature of 95-100 °C to obtain a boron carbide powder for granulation.

2. The method for preparing a boron carbide powder according to claim 1, wherein the first dispersion solution is an aqueous solution of tetramethylammonium hydroxide, a mass ratio of the aqueous solution of tetramethylammonium hydroxide to the raw boron carbide powder is (1-1.2):1, and a total mass of the tetramethylammonium hydroxide is 1-2% of the total mass of the raw boron carbide powder.

3. The method for preparing a boron carbide powder according to claim 2, wherein the two sizes of boron carbide grinding balls are boron carbide grinding balls with diameters of 6-8 mm and 1-2 mm in a mass ratio of 1:1.

4. The method for preparing a boron carbide powder according to claim 3, wherein a mass of the water-soluble phenolic resin is 5-10% of the total mass of the raw boron carbide powder, and a mass of the sodium carboxymethyl cellulose is 2-3% of the total mass of the raw boron carbide powder.

5. The method for preparing a boron carbide powder according to claim 4, wherein the second dispersion solution is an aqueous solution of polyethylene glycol, and a mass of the polyethylene glycol is 1-2% of the total mass of the raw boron carbide powder.

6. The method for preparing a boron carbide powder according to any one of claims 1-5, wherein before the pre-dispersion step S1, the method further comprises a pretreatment step S0, wherein the pretreatment step specifically comprises:
firstly, placing the raw boron carbide powder with two particle size ranges into a container, adding NaF powder, and stirring the mixed powder evenly; then adding an appropriate amount of 0.01-0.02 mol/L dilute hydrochloric acid solution, stirring the mixture continuously at 20-65 °C for 1-5 h, followed by centrifugal separation, and collecting the solid obtained from centrifugal separation; and
washing the solid 1-3 times with isopropanol solution, and drying the solid to obtain a pretreated raw boron carbide powder with two particle size ranges.

7. The method for preparing a boron carbide powder according to claim 6, wherein the raw boron carbide powder with two particle size ranges is boron carbide with an average particle size of 10-20 µm and an average particle size of 40-50 µm in a mass ratio of 1:1.

8. The method for preparing a boron carbide powder according to claim 7, wherein a mass of the NaF powder is 0.05-0.1% of the total mass of the raw boron carbide powder to be pretreated in S0.

9. A boron carbide bulletproof ceramic, wherein the boron carbide powder prepared by the method for preparing a boron carbide powder according to any one of claims 1-8 is subjected to pressing and pressureless sintering to obtain the boron carbide bulletproof ceramic.
